# EUROPÄISCHE PATENTSCHRIFT

(11) **EP 1 435 805 B1**
(45) Veröffentlichungstag und Bekanntmachung des Hinweises auf die Patenterteilung: **30.11.2005**
(21) Anmeldenummer: 02801881.0
(22) Anmeldetag: 05.10.2002
(51) Int. Cl.: A45B 9/00, A63C 11/22, F16F 3/12

(54) **TREKKINGSTOCK MIT STOSSDÄMPFER**
TREKKING STICK COMPRISING A SHOCK ABSORBER
BATON DE TREKKING DOTE D'UN AMORTISSEUR DE CHOCS

(30) Priorität: 18.10.2001 DE 20117146 U
(43) Veröffentlichungstag der Anmeldung: 14.07.2004
(73) Patentinhaber: Lenhart, Klaus, 73275 Ohmden (DE)
(72) Erfinder: Lenhart, Klaus, 73275 Ohmden (DE)
(74) Vertreter: Fuhlendorf, Jörn
(86) Internationale Anmeldenummer: PCT/EP2002/011198
(87) Internationale Veröffentlichungsnummer: WO 2003/034859

(56) Entgegenhaltungen:
- EP-A- 0 738 837
- EP-A- 0 904 810
- CH-A- 680 771
- DE-U- 29 813 601

## Beschreibung

Die vorliegende Erfindung bezieht sich auf einen Stock, wie Trekking, Ski-, Wanderstock, nach dem Oberbegriff des Anspruchs 1.

Bei einem aus dem DE-U-298 13 601 bekannten Stock dieser Art ist die Dämpferstange von einer metallischen Druckwendelfeder umgeben, deren einmal eingestellte Vorspannung und Charakteristik die Dämpfungseigenschaften des Stocks während der Benutzung bestimmt. Nachteilig hieran ist der realtiv harte Einfederungseffekt und die für den Benutzer deutlich fühlbare Rückfederung, die ruckartig und rückstoßartig erfolgt. Wollte man dies verhindern, müsste eine speziell gewickelte Wendelfeder verwendet werden, deren Herstellung aufwendig ist. Bei metallischem Rohr können zwischen diesem und der metallischen Druckwendelfeder Geräusche auftreten.

Aus der CH 680 771 A5 ist ein Stock mit einem Stoßdämpfer bekannt geworden ist, bei dem die Druckfedervorrichtung ausschließlich aus einem Elastomerstab besteht. Ein derartiger Elastomerstab hat, wie eine metallische Druckwendelfeder entsprechend der genannten DE-298 13 601 U1 eine einheitliche Charakteristik hinsichtlich Dämpfungseigenschaften, auch wenn sie gegenüber einer metallischen Druckwendelfeder einen weicheren Einfederungseffekt bei ansteigender Federkraft bewirkt.

Aufgabe der vorliegenden Erfindung ist es, einen Stock, wie Trekking-, Ski-, Wanderstock, der eingangs genannten Art zu schaffen, dessen stoßdämpfende Eigenschaften weniger hart und dessen Rückfederungseigenschaften weniger ruckartig und rückstoßfreier sind.

Zur Lösung dieser Aufgabe sind bei einem Stock der genannten Art die im Anspruch 1 angegebenen Merkmale vorgesehen.

Durch die erfindungsgemäßen Maßnahmen ergibt sich eine nichtlineare Federkennlinie sowie ein weicherer und leiserer Einfederungseffekt bei ansteigender Federkraft. Für den Benutzer bedeutet dies außerdem, dass die fühlbare Rückfederung des Stockes deutlich angenehmer ist, da sie sich weder ruckartig und damit rückstoßfreier vollzieht. Dabei ist die Kombination aus Elastomerfedern und Druckwendelfeder in Form einer Reihenanordnung vorgesehen.

In weiterer vorteilhafter Ausgestaltung kann zur weiteren Optimierung der Dämpfungseigenschaften der Stoßdämpfer gemäß den Merkmalen des Anspruchs 2 aufgebaut sein.

In zweckmäßiger Ausgestaltung sind die Merkmale nach Anspruch 3 vorgesehen, was u.a. bedeutet, dass die metallische Wendelfeder der Reihenanordnung innerhalb der vorzugsweise aus Kunststoff bestehenden Führungshülse geführt ist.

Nach dem Ausführungsbeispiel des Anspruchs 4 ergibt sich eine Erhöhung der Feder- und damit der Dämpfungseigenschaften, wobei die Wandanlagereibung der sich beim Komprimieren aufweitenden Elastomerfeder ausgenutzt wird.

Eine endseitige Halterung der Druckwendelfeder ergibt sich dann, wenn die Merkmale nach Anspruch 5 vorgesehen sind.

Um die Stoßdämpfereigenschaften bzw. die Härte des Stoßdämpfers variieren und damit an die individuellen Bedürfnisse des Benutzers anpassen zu können, sind die Merkmale nach Anspruch 6 vorgesehen. Eine vorteilhafte konstruktive Ausgestaltung ergibt sich dabei nach den Merkmalen nach Anspruch 7 und/oder 8.

In weiterer Ausgestaltung sind die Merkmale nach Anspruchen 9 vorgesehen, so dass in vorteilhafter Weise der Stoßdämpfer gleichzeitig das Verbindungsstück zur axialen und drehfesten Verbindung zweier teleskopisch bewegbaren Rohrteile trägt.

Eine besonders vorteilhafte und bevorzugte Ausführung der Elastomerfeder (n) ergibt aus den Merkmalen des Anspruchs 10.

Weitere Einzelheiten der Erfindung sind der folgenden Beschreibung zu entnehmen, in der die Erfindung näher beschrieben und erläutert ist. Es zeigen:
- Figur 1: in längsgeschnittener und abgebrochener Darstellung den mit einem Stoßdämpfer versehenen Bereich eines Stockes wobei die Darstellung kein erfindungsgemäßes Ausführungsbeispiel zeigt und
- Figuren 2A, 2B und 2C: jeweils einen Querschnitt längs der Linie A-A, bzw. B-B, bzw. C-C der Figur 1, jedoch ohne Außenrohr.

Der in in der Zeichnung lediglich bereichsweise dargestellte Stock 10 in form beispielsweise eines Trekkingstockes, eines Skistockes, eines Wanderstockes oder dergleichen ist mit einem Stoßdämpfer 11 versehen, der einenends in einem ersten Rohrteil 13 eines Stockrohres 12 und anderenends in einem im ersten Rohrteil 13 axial verschiebbaren Rohrteil 14 des Stockrohres 12 im Betrieb sowohl axial fest, als auch drehfest klemmbar bzw. gehalten ist. Dabei ist das Stockrohr 12 einenends bzw. eines der Rohrteile 13, 14, mit einem nicht dargestellten Stockgriff und das Stockrohr 12 anderernends bzw. das andere Rohrteil 14, 13, mit einer nicht dargestellten Stockspitze oder einem weiteren Teleskoprohrteil bestückt bzw. verbunden.

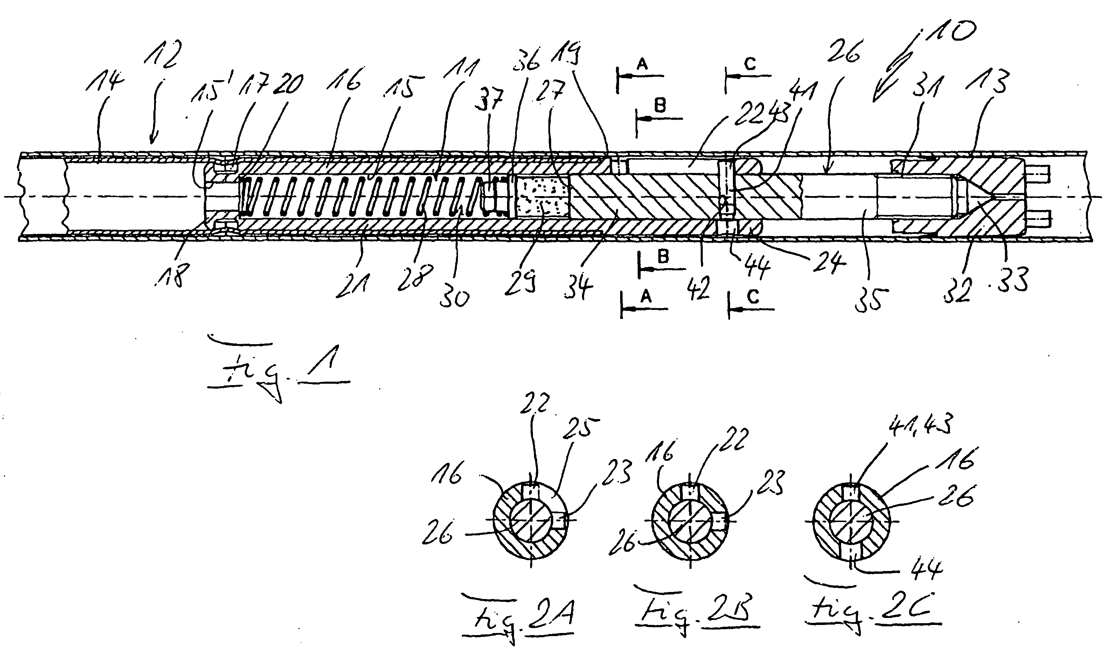

Der Stoßdämpfer 11 besitzt eine Führungshülse 16 aus beispielsweise Kunststoff, die mit einem inneren Bereich 21 in das andere hier dünnere Rohrteil 14 eingeschoben ist und an ihrem inneren freien Ende 18 im Rohrteil 14 axial und umfangsmäßig fixiert gehalten ist. Wie Figur 1 zu entnehmen ist, ist das Ende 18 mit radialen Sacklochbohrungen 17 versehen, in die das Rohrteil 14 umfangsseitig eingeprägt ist, so dass die genannte axiale und umfangsseitige Sicherung unlösbar gegeben ist. Die Führungshülse 16 ist in einem äußeren Bereich 24 mit einem Bund 19 versehen, der an der Ringstirn des zweiten Rohrteils 14 anliegt. Es versteht sich, dass die Führungshülse 16 in das Rohrteil 14 zusätzlich eingepresst und/oder einklebt sein kann. Die Führungshülse 16 besitzt eine axiale Bohrung 15, die an einer Innenringschulter 20 des freien Endes 18 endet und in eine durchmesserkleinere Bohrung 15' im Ende 18 übergeht.

An ihrem aus dem Rohrteil 14 herausragenden Bereich 24, die durchmessergrößer als der innere Bereich 21 ist, besitzt die Führungshülse 16 zwei umfangsseitig um 90° gegeneinander versetzte axiale Nuten 22, 23, die vom Außenumfang der Führungshülse 16 her eingearbeitet sind. An ihrem zum inneren Bereich 21 zugewandten Ende sind die Nuten 22 und 23 über eine radial gerichtete über 90° verlaufende Umfangsnut 25 miteinander verbunden. Die axialen Nuten 22, 23 und die Umfangsnut 25 besitzen gleiche Breite.

Ausgehend von der Umfangsnut 25 besitzt die axiale Nut 22 eine größere axiale Länge, als die axiale Nut 23. Die Länge der längeren Nut 22 ergibt sich aus Figur 1, während die Länge der kürzeren axialen Nut 23 in Figur 1 lediglich angedeutet ist.

Der Stoßdämpfer 11 besitzt ferner eine Dämpferstange 26, die im Querschnitt zylindrisch ist und die an ihrem einen inneren Endbereich 34 in der Führungshülse 16 axial verschiebbar geführt ist. Am anderen äußeren Endbereich 35 ist die Dämpferstange 26 mit einem Außengewinde 31 und einer konischen Spitze 33 versehen, auf das bzw. über die ein Spreizelement 32 aufschraubbar ist, mit dem der Stoßdämpfer 11 im durchmessergrößeren ersten Rohrteil 13 verdrehsicher und axial fest jedoch jeweils lösbar gehalten ist.

Zwischen der Endstirn 27 der Dämpferstange 26 und der Innenschulter 20 in der Führungshülse 16 ist eine Druckfederanordnung 30 gehalten, die sich aus einer Reihenanordnung einer Druckwendelfeder 28 aus Federstahldraht und einer Elastomerfeder 29 aus Kunststoff zusammensetzt. Die Elastomerfeder 29 ist aus einem zelligen Kunststoffmaterial, vorzugsweise einem PU-Schaum hergestellt. Beim dargestellten Beispiel ist eine Elastomerfeder 29 am einen der Dämpferstange 26 zugewandten Ende der Druckwendelfeder 28 angeordnet. Erfindungsgemäß ist eine solche Elastomerfeder 29 auch am anderen Ende der Druckwendelfeder 28 vorgesehen. Es ist auch möglich, an einem oder beiden Enden der Druckwendelfeder 28 jeweils mehr als eine Elastomerfeder 29 hintereinander anzuordnen, wobei es dann sinnvoll ist, die hintereinander angeordneten Elastomerfedern 29 mit unterschiedlicher Federcharakteristik z.B. aufgrund unterschiedlicher Härte auszustatten. Beim Ausführungsbeispiel ist die Elastomerfeder 29 voll- zylindrisch ausgebildet und liegt außendurchmessergleich oder -kleiner an der Endstirn 27 der Dämpferstange 26 an. Außerdem ist es möglich, die Elastomerfeder 29 mit einem sich beim Komprimieren aufbauchenden Außendurchmesser zu versehen, so dass die Elastomerfeder an der Innenwandung der axialen Bohrung 15 reibt, was zur Veränderung der Dämpfungseigenschaft ausgenutzt werden kann. Das abgewandte Ende der Elastomerfeder 29 ist von einer Scheibe 36 belegt, deren angeformter Zapfen 37 in das eine Ende der Druckwendelfeder 28 ragt.

In der in Figur 1 dargestellten Ausgangsstellung ist die Druckferderanordnung 30 vorgespannt, so daß die Dämpferstange 26 mit einem Anlagestift 41 gegen einen Anschlag an der Dämpferstange 26, die über das Spreizelement 32 im Rohrteil 13 ortsfest gehalten ist, gedrückt ist. Der Anlagestift 41 liegt in einer Querbohrung 42 der Dämpferstange 26 in einem etwa längsmittigen Bereich. Der Anlagestift 41 ragt einseitig radial über den Außenumfang der Dämpferstange 26 hinaus und liegt mit diesem Ende 43 in einer der beiden axialen Nuten, im Falle der Figur 1 in der Nut 22. Das diametral gegenüberliegende Ende des Anlagestiftes 41 liegt innerhalb der als Stufenbohrung ausgebildeten Querbohrung 42, der eine an diesem Außenumfangsbereich vorgesehene radiale Bohrung 44 in der Führungshülse 16 gegenüberliegt. Diese gegenüber der Querbohrung 42 durchmessergrößere radiale Bohrung 44 dient dem Demontieren des Anlagestiftes 41.

In der in Figur 1 dargestellten Anordnung ist der Anlagestift 41 mit seinem herausragenden Ende 43 in der längeren Nut 22 axial hin und her bewegbar, so dass die Druckfederanordnung 30 über einen maximalen Weg zusammengedrückt bzw. komprimiert werden kann. Aufgrund der unterschiedlichen Federcharakteristika von Druckwendelfeder 28 und Elastomerfeder 29 wird eine nichtlineare Dämpfung erreicht. Entsprechendes gilt für die Expansion, d.h. den zurückfedernden Verlauf.

In vollständig zusammengedrückter Lage der Druckfederanordnung 30 befindet sich das Ende 43 des Anlagestiftes 41 am Endanschlag gemäß Schnitt A-A der Figur 2A, in welcher Lage das Anlagestiftende 43 in der Umfangsnut 25 um 90° bewegt werden kann. In dieser Stellung befindet sich das Ende 43 des Anlagestiftes 41 dann am Ende der kürzeren axialen Nut 23, so dass beim Entspannen die kürzere axiale Nut 23 der Führung des Anlagestiftendes 43 dient. In dieser die Rohrteile 13, 14 axial nicht beantspruchten Lage ist die Druckfederanordnung 30 stärker zusammengedrückt, als dies für die Ausgangslage nach Figur 1 gilt. Mit anderen Worten, bei wiederholter axialer Beanspruchung ergibt sich über einen kürzeren Weg eine andere Dämpfungscharakteristik, deren Anfangsdämpfung ein höherer Kraftaufwand zugrunde liegt.

Der Anlagestift 41 dient somit sowohl der Dämpfungswegbegrenzung bei der axialen Relativbewegung von Rohrteil 13 und Rohrteil 14 als auch zur drehfesten Verbindung bzw. Anordnung der Dämpferstange 26 gegenüber der Führungshülse 16. Es versteht sich, dass zur unterschiedlichen Vorspannung der Druckfederanordnung 30 auch mehr als zwei unterschiedlich lange axiale Nuten 22, 23 vorgesehen sein können, in die das Ende 43 des Anlagestiftes 41 durch ein relatives Verdrehen von Führungshülse 16 und Dämpferstange 26 in vollständig zusammengedrückter Lage der Druckfederanordnung 30 gebracht werden kann.

Es versteht sich, dass die Stoßdämpferanordnung auch bei nicht längenverstellbaren Stöcken und auch bei längenverstellbaren Stöcken mit einem anderen Verstellsystem, wie beispielsweise einem stufenweise verstellbaren Druckknopfsystem, eingesetzt werden kann.

## Patentansprüche

1. Stock (10), wie Trekking-, Ski-, Wanderstock, mit einem Stoßdämpfer (11) zwischen einem ersten und einem zweiten Rohrteil (13, 14) eines mit Handgriff und Stockspitze versehenen Stockrohres (12), wobei der Stoßdämpfer (11) eine in einem Rohrteil (13, 14) drehfest gehaltene Führungshülse (16), in der eine am anderen Rohrteil (14, 13) axial festgehaltene Dämpferstange (26) geführt ist, und eine zwischen Führungshülse (16) und Dämpferstange (26) wirkende eine vollzylindrische Elastomerfeder (29) aufweisende Druckfedervorrichtung (30) aufweist, **dadurch gekennzeichnet, dass** die Druckfedervorrichtung in Reihenanordnung eine Druckwendelfeder (28)und an deren beiden axialen Enden je eine Elastomerfeder (29) aufweist.

2. Stock nach Anspruch 1, **dadurch gekennzeichnet, dass** Elastomerfedern (29) unterschiedlicher Härte vorgesehen sind.

3. Stock nach Anspruch 1 oder 2, **dadurch gekennzeichnet, dass** das eine axiale Ende der Reihenanordnung aus Druckwendelfeder (28) und Elastomerfedern (29) an einer inneren Schulter (20) der Führungshülse (16) und das andere Ende an der axialen Stirn (27) der Dämpferstange (26) anliegt.

4. Stock nach Anspruch 1, **dadurch gekennzeichnet, dass** die Elastomerfeder (28) einen sich beispielsweise bauchig aufweitenden Außenumfang besitzt.

5. Stock nach mindestens einem der vorhergehenden Ansprüche, **dadurch gekennzeichnet, dass** zwischen den Elastomerfedern(29) und der Druckwendelfeder (28) eine Scheibe (36) mit einem in die Druckwendelfeder (28) eindringenden Zapfen (37) vorgesehen ist.

6. Stock nach mindestens einem der vorhergehenden Ansprüche, **dadurch gekennzeichnet, dass** die Dämpferstange (26) in und gegenüber der Führungshülse (16) in unterschiedlichen axialen Lagen festlegbar ist.

7. Stock nach Anspruch 6, **dadurch gekennzeichnet, dass** die Dämpferstange (26) an einem in der Führungshülse (16) angeordneten Bereich mit einem Rastelement in Form eines die Dämpferstange (26) einseitig radial überragenden Stiftes (41) versehen ist, der durch relatives Verdrehen der Führungshülse (16) gegenüber der Dämpferstange (26) in über den Umfang der Führungshülse verteilt angeordneten, unterschiedlich langen, axialen Führungsnuten (22, 23) wahlweise aufnehmbar ist.

8. Stock nach Anspruch 7, **dadurch gekennzeichnet, dass** über den Umfang der Führungshülse (16) zwei oder mehr unterschiedlich lange Führungsnuten (22, 23) in einem winkligen Abstand von 90° vorgesehen sind.

9. Stock nach mindestens einem der vorhergehenden Ansprüche, **dadurch gekennzeichnet, dass** die Dämpferstange (26) des Stoßdämpfers (11) an ihrem der Führungshülse (16) abgewandten Ende mit einem im anderen Rohrteil (14, 13) axial stufenlos reibschlüssig oder axial stufenweise formschlüssig festlegbaren Verbindungsstücke versehen ist.

10. Stock nach mindestens einem der vorhergehenden Ansprüche, **dadurch gekennzeichnet, dass** die Elastomerfedern (29) aus zelligem Kunststoffmaterial, vorzugsweise PU-Schaum, besteht.

## Claims

1. A stick (10) such as a trekking stick, a ski pole, or a walking stick, comprising a shock absorber (11) that is disposed between a first and second tubular part (13, 14) of a tubular stick (12) that is provided with a handle and a tip, the shock absorber (11) having a guide sleeve (16), which is supported in a rotationally fixed manner on one tubular part (13, 14), and in which a damper rod (26) that is axially fixed to the other tubular part (14, 13) is guided, and a compression spring device (30), which operates between the guide sleeve (16) and the damper rod (26) and which comprises a solid cylindrical elastomer spring (29), **characterized in that** the compression spring device (30) comprises in tandem a coil compression spring (28) and at both of its axial ends an elastomer spring (29).

2. The stick as recited in Claim 1, **characterized in that** elastomer springs (29) having varying degrees of hardness are provided.

3. The stick as recited in Claim 1 or 2, **characterized in that** the one axial end of the tandem arrangement composed of the coil compression spring (28) and the elastomer springs (29) contacts an interior shoulder (20) of the guide sleeve (16), and the other end contacts the axial end face (27) of the damper rod (26).

4. The stick as recited in Claim 1, **characterized in that** the elastomer spring (28) has an exterior circumference that expands, for example, in a bulging fashion.

5. The stick as recited in at least one of preceding claims, **characterized in that** a disk (36) having a neck (37) that penetrates into the coil compression spring (28) is provided between the elastomer springs (29) and the coil compression spring (28).

6. The stick as recited in at least one of the preceding claims, **characterized in that** the damper rod (26) can be fixed in and with respect to the guide sleeve (16) in various axial positions.

7. The stick as recited in Claim 6, **characterized in that** the damper rod (26) in an area arranged in the guide sleeve (16) is provided with a locking element in the form of a pin (41) that radially extends on one side beyond the damper rod (26), the pin, when the guide sleeve (16) is rotated relative to the damper rod (26), being selectively received in axial guide grooves (22, 23) that are of varying lengths and that are arranged so as to be distributed over the circumference of the guide sleeve.

8. The stick as recited in Claim 7, **characterized in that** two or more guide grooves (22, 23) of varying lengths are provided having an angular separation of 90° over the circumference of the guide sleeve (16).

9. The stick as recited in at least one of the preceding claims, **characterized in that** the damper rod (26) of the shock absorber (11) at its end facing away from the guide sleeve (16) is provided with a connecting piece that can be axially fixed in the other tubular part (14, 13) in a continuous, friction-locking manner or in a stepwise, form-locking manner.

10. The stick as recited in at least one of the preceding claims, **characterized in that** the elastomer springs (29) are made of a cellular plastic material, preferably a polyurethane foam.

## Revendications

1. Bâton (10), tel qu'un bâton de trekking, de ski ou de randonnée, comportant un amortisseur de chocs (11) entre une première et une seconde parties tubulaires (13, 14) d'un tube de bâton (12) pourvu d'une poignée et d'une pointe de bâton, l'amortisseur de chocs (11) présentant un manchon de guidage (16) tenu de manière à ne pas pouvoir tourner dans une partie tubulaire (13, 14), manchon dans lequel est guidée une tige d'amortisseur (26) tenue axialement de manière fixe sur l'autre partie tubulaire (14, 13), et un dispositif à ressort de pression (30) comportant un ressort en élastomère (29) cylindrique plein agissant entre le manchon de guidage (16) et la tige d'amortisseur (26), **caractérisé en ce que** le dispositif à ressort de pression présente en alignement un ressort spiral de pression (28) et à ses deux extrémités axiales un ressort en élastomère (29).

2. Bâton selon la revendication 1, **caractérisé en ce que** les ressorts en élastomère (29) sont prévus avec des duretés différentes.

3. Bâton selon la revendication 1 ou 2, **caractérisé en ce que** l'une des extrémités axiales de l'alignement composé d'un ressort spiral de pression (28) et de ressorts en élastomère (29) s'appuie contre un épaulement intérieur (20) du manchon de guidage (16) et l'autre extrémité contre la face axiale (27) de la tige d'amortisseur (26).

4. Bâton selon la revendication 1, **caractérisé en ce que** le ressort en élastomère (29) possède un pourtour extérieur qui s'élargit par exemple de manière convexe.

5. Bâton selon au moins l'une des revendications précédentes, **caractérisé en ce que**, entre les ressorts en élastomère (29) et le ressort spiral de pression (28), il est prévu un disque (36) avec un tenon (37) pénétrant dans le ressort spiral de pression (28).

6. Bâton selon au moins l'une des revendications précédentes, **caractérisé en ce que** la tige d'amortisseur (26) est fixable dans le manchon de guidage (16) selon différentes positions axiales par rapport au manchon de guidage (16).

7. Bâton selon la revendication 6, **caractérisé en ce que** la tige d'amortisseur (26) est pourvue sur une zone agencée dans le manchon de guidage (16) d'un élément d'arrêt sous la forme d'une broche (41) dépassant radialement d'un côté de la tige d'amortisseur (26), laquelle broche, par rotation relative du manchon de guidage (16) par rapport à la tige d'amortisseur (26), peut être logée au choix dans des rainures de guidage (22, 23) axiales de différentes longueurs réparties sur le pourtour du manchon de guidage.

8. Bâton selon la revendication 7, **caractérisé en ce qu'**il est prévu sur le pourtour du manchon de guidage (16) deux rainures de guidage (22, 23) ou plus de longueur différente à une distance angulaire de 90°.

9. Bâton selon au moins l'une des revendications précédentes, **caractérisé en ce que** la tige d'amortisseur (26) de l'amortisseur de chocs (11) est pourvue à son extrémité orientée à l'opposé du manchon de guidage (16) d'un élément de liaison fixable axialement dans l'autre partie tubulaire (14, 13) sans paliers par friction ou par paliers par correspondance de forme.

10. Bâton selon au moins l'une des revendications précédentes, **caractérisé en ce que** les ressorts en élastomère (29) sont en matière plastique alvéolaire, de préférence en mousse de polyuréthanne.
